(19) Europäisches Patentamt
European Patent Office
Office européen des brevets

(11) **EP 2 846 605 A1**

(12) **EUROPEAN PATENT APPLICATION**

(43) Date of publication:
**11.03.2015 Bulletin 2015/11**

(51) Int Cl.:
***H04W 88/08*** (2009.01)

(21) Application number: **13183076.2**

(22) Date of filing: **05.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kapsch Carriercom AG**
**1120 Wien (AT)**

(72) Inventors:
• **Botet, Gil**
**78180 MONTIGNY-LE-BRETONNEUX (FR)**
• **Lopes, Vincent**
**91440 BURES-SUR-YVETTE (FR)**

(74) Representative: **Weiser, Andreas**
**Patentanwalt**
**Kopfgasse 7**
**1130 Wien (AT)**

(54) **Radio subsystem and method of calibrating the same**

(57)    A radio subsystem (10) for serving an area along a line comprises at least two base transceiver stations (11) each of which has a radio equipment control (1) driving a series of radio equipments (2) connected thereto in a CPRI chain (3), each radio equipment (2) having a buffer memory (15) delaying signals to its radio output (5), wherein the radio equipment controls (1) are installed at a common site (12), the radio equipments (2) of a first of said chains (3, $C_N$) are distributed along a first segment $(S_N)$ of the elongated area (4), the radio equipments (2) of a second of said chains (3, $C_N$) are distributed along a subsequent second segment $S_N$ of the elongated area (4), and the size of the buffer memory (15) of the radio equipments (2) of a chain (3, $C_N$) is limited to provide a maximum delay time which is equal to the maximum relaying time of a signal from a first to a last radio equipment in said chain (3, $C_N$). The invention further relates to a method of calibrating such a radio subsystem (10).

*Fig. 2*

## Description

The present invention relates to a radio subsystem for serving an area along a line, in particular a railway line.

Radio subsystems that are within the scope of this invention are the ones according to 3GPP (3rd generation partnership project) standards such as GSM/GSM-R, UMTS or LTE and any other wireless communication standards such as TETRA, WIMAX, WIFI etc. that may have a need for synchronization between different entities of the subsystem, similarly to what is defined e.g. for GSM in section 5.3 of the 3GPP technical specifiction TS 45.010, "Radio Subsystem Synchronization", downloadable from www.3gpp.org/ftp/specs/html-info/45010.htm. When reference is made to GSM/GSM-R in the following, this is for illustration purposes only.

For serving an area distributed along an elongated line, e.g. a railway line, base transceiver stations (BTSs) of the radio subsystem can be physically separated into a "digital module" (DM) and one or more "remote radio heads" (RRHs). The RRHs can be distributed along the railway line in form of a chain connected to the DM. The connection between DM and RRHs can be set up e.g. as a CPRI chain, i.e. with interfaces according to CPRI Specification, "Common Public Radio Interface (CPRI) Specification", downloadable from www.cpri.info/ downloads/CPRI_v_5_0_2011-09-21.pdf. In the CPRI standard the DM functions as a "radio equipment control" (REC) and the RRH as a "radio equipment" (RE); therefore, in the following, the terms DM and REC, and RRH and RE, are used interchangeably. The CPRI standard is a way amongst others for connecting REC and REs and will be used herein as an example. The invention also applies to other connection standards, e.g. the OBSAI (open base station architecture initiative) standard.

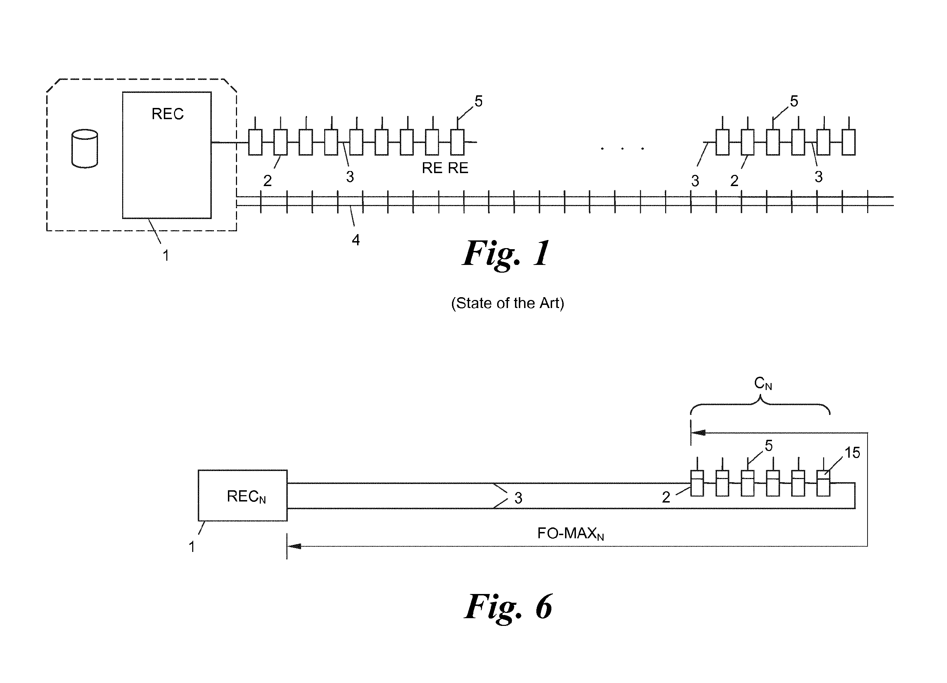

In recent times, there is an increasing need to equip railway tracks along several hundreds of kilometers with REs for 3GPP radio coverage. In order to obtain a good coverage for train services, a typical distance between two consecutive REs is about ten kilometers or less. Fig. 1 (state of the art) shows such an installation: A REC 1 drives a series of REs 2 over a CPRI chain 3 along a railway line 4. The combination of REC 1 and REs 2 managed by this REC 1 forms a BTS in terms of the 3GPP standard TS 45.010, chapter 5.3, for serving a GSM radio cell covering the railway line 4. In that sense, all REs 2 must be synchronized with one another to transmit their GSM radio bursts at exactly the same time on their radio outputs 5.

However, in practice the approach of Fig. 1 is limited in length of the railway line 4 to cover, for several reasons:

- CPRI bandwidth is currently limited to 9830.4 Mbps at maximum, therefore it cannot handle a large number of REs 2 in a single CPRI chain 3.
- Processing power inside REC 1 necessary to handle the base-band signal processing of many REs 2 in one module leads to a very difficult design.
- Because of the cumulation of propagation delay along the CPRI chain 3, e.g. embodied as an optical fibre with a delay of typically 49 μs per 10 km, plus the delays to cross intermediate REs, the GSM constraint of synchronized radio bursts on the outputs 5 of the REs 2 obliges REs that are closer to REC 1 to buffer a very large quantity of data before being allowed to transmit the corresponding bursts on their radio output 5 (the closer the REC, the more buffering). This comes at a cost in terms of RAM memory which has to be equipped in each RE hardware, to the detriment of the cost of the overall solution.

It is an object of the present invention to overcome the drawbacks of the prior art and to provide a radio subsystem and a method of calibrating the same with enhanced radio coverage while maintaining REC/RE connection and synchronization contraints.

In a first aspect of the invention this object is achieved with a radio subsystem for serving an area along a line, in particular a railway line, comprising:

at least two base transceiver stations each of which has a radio equipment control driving a series of radio equipments connected thereto in a chain, the radio equipments having radio outputs for signals relayed over the chain,
each radio equipment having a buffer memory delaying signals to its radio output by a delay time which is increasing with decreasing distance from its radio equipment control,
wherein the radio equipment controls are installed at a common site, the radio equipments of a first of said chains are distributed along a first segment of the elongated area, the radio equipments of a second of said chains are distributed along a subsequent second segment of the elongated area, and
the size of the buffer memory of the radio equipments of a chain is limited to provide a maximum delay time which is equal to the maximum relaying time of a signal from a first to a last radio equipment in said chain.

According to the invention, the elongated area to cover is segmented into a series of shorter subsegment chains ("clusters") of REs. Each cluster can have a limited number of REs, for instance 6 REs for GSM-R. Nevertheless, all RECs of the different chains (clusters) are installed at a common site, e.g. protected in an indoor shelter. In this way, the limited maximum bandwidth e.g. of the standard is not critical: In a practical implementation, six REs in a CPRI chain - each containing e.g. two transceivers - consume a data rate of 2457.6 Mbit/s, which follows Option 3 of the CPRI standard. Each REC can have a limited processing power, e.g. 12 transceivers in a practical implementation of a BTS for GSM-R, and is hence easier to design. As each REC and its managed REs are considered as one BTS for the 3GPP standard, all the REs of a given cluster can be synchronized together, but not necessarily the REs of different clusters. This allows to limit the buffer memory of each RE, as will be explained further on. In fact, the memory required in a RE is a function of the span of a cluster the RE belongs to and not the span of the entire elongated serving area of the 3GPP radio subsystem. Last but not least, the clustering of the REs allows for an easy upscaling of the subsystem by simply adding more clusters and hence more RECs in order to cover longer distances.

Preferably, the chains of the RE clusters are connected to the common site via a common physical connection in order to minimize wiring. The physical connection is preferably an optical fibre link over which the CPRI links for the different chains can be multiplexed. In particular, wavelength-division multiplexing (WDM) is used to connect the CPRI chains over the common optical fibre link, combining high bandwidth with ease of installation and reduced transmission costs.

Positioning the RECs at a common site allows the RECs to be sheltered in a housing, indoors, protected against weather and detrimental influences.

In all embodiments at least one of the chains can be connected in a ring topology to its REC for failsafe redundancy.

The inventive radio subsystem can be used for all types of radio networks. In a preferred embodiment the elongated serving area is a railway line, the chains are CPRI chains, and/or each base transceiver station implements a BTS according to the GSM-R standard.

In a second aspect the invention provides for a method for calibrating a radio subsystem of the aforementioned kind, comprising:

for each chain, determining a maximum delay of a signal relayed from the radio equipment control to the farthest radio equipment of said chain, and

for each other radio equipment of said chain, determining a respective delay of a signal relayed from the radio equipment control to said radio equipment and calculating a buffering delay for said radio equipment based on the difference between said maximum delay and said respective delay.

Said maximum and respective delays can e.g. be precalculated according to the geographical distances of the REs to their respective REC, taking into account any possible hardware delays within a RE when delaying a signal over the chain to a subsequent RE. Alternatively, said delays can be measured, in particular by round-trip measurements e.g. on CPRI data packets. The calculated or measured delays can then be used to calculate the buffering delays (buffer sizes to use) for the REs of a chain, in particular in the respective REC driving that chain, and then sent therefrom to the respective RE via a point-to-point message, e.g. in a CPRI control-and-management (C&M) channel.

Further features and benefits of the invention will now become apparent from the following description of exemplary embodiments thereof given with reference to the enclosed drawings, in which:

Fig. 1 is a block diagram of a 3GPP radio subsystem according to the state of the art;
Fig. 2 is a block diagram of a first embodiment of a 3GPP radio subsystem according to the invention;
Fig. 3 is a block diagram of a second embodiment of a 3GPP radio subsystem according to the invention;
Figs. 4a and 4b are delay time diagrams for the farthest and the closest RE, respectively, in a first CPRI chain of the embodiments of Figs. 2 and 3;
Figs. 5a, 5c, 5d are delay time diagrams for the farthest, the closest and an intermediate RE, respectively, in an intermediate CPRI chain (cluster) N of the embodiments of Figs. 2 and 3 while Fig. 5b shows the mathematical relation between the fibre optic delay of the farthest RE and the fibre optic delay of the closest possible RE on the same CPRI chain (cluster); and
Fig. 6 shows a block diagram of a CPRI chain used in a ring connection.

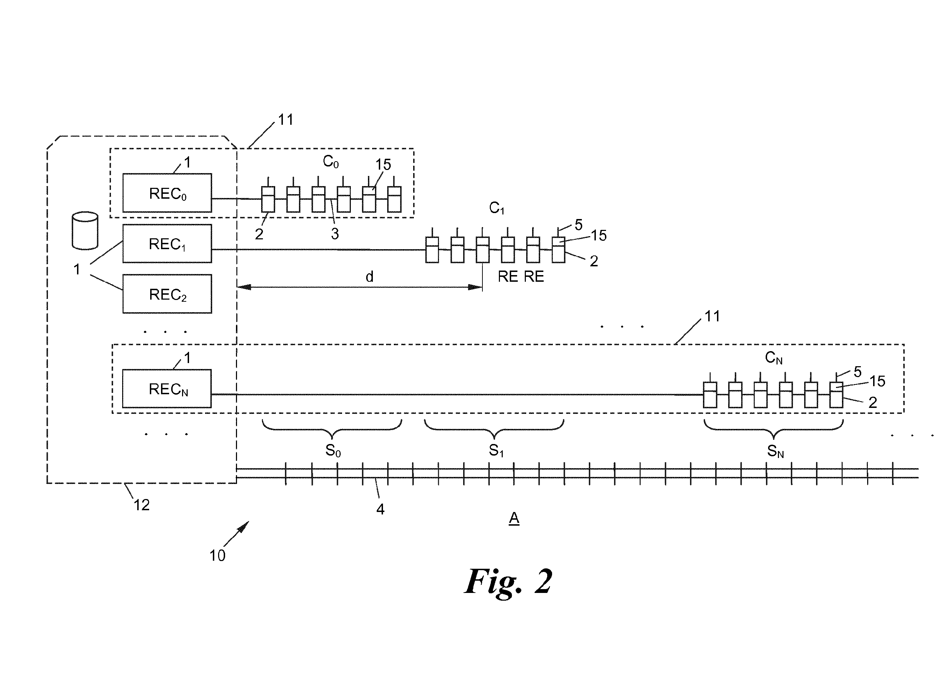

According to Fig. 2 a 3GPP (third generation partnership project) radio subsystem 10, e.g. in the framework of the GSM or GSM-R standard, comprises a multitude of base transceiver stations (BTSs) 11 each of which follows the functional split between "digital module" (DM) or "radio equipment control" (REC) 1 on the one hand and a series of "remote radio heads" (RRHs) or "radio equipments" (REs) 2 on the other hand (conf. Fig. 1). The REs 2 are connected to their managing REC 1 in a chain 3 according to the CPRI standard CPRI Specification, "Common Public Radio Interface (CPRI) Interface Specification", www.cpri.info/downloads/CPRI_v_5_0_2011-09-21.pdf, and according to the 3GPP standard TS 45.010, "Radio subsystem synchronization", www.3gpp.org/ftp/Specs/htmlinfo/45010.htm, for synchronization aspects.

The radio subsystem 10 can also be implemented according to other standards than GSM, e.g. UMTS, LTE, LTE-A, TETRA, WIMAX, WIFI et cet.

As shown in Fig. 2, the different BTSs 11 are distributed with mutual distances along a line 4 in a serving area A, in this embodiment, along a railway line 4. In particular, the REs 2 of a first CPRI chain 3, also called "cluster" $C_0$ are distributed along a first segment So of the railway line 4, the REs 2 of a second CPRI chain 3 (cluster) $C_1$ are distributed along a subsequent second segment $S_1$ of the railway line 4, and so forth. An exemplary intermediate or last CPRI chain 3 (cluster) $C_N$ is depicted further downstream as being distributed over a further segment $S_N$. The distances between the individual REs 2 in a cluster $C_N$ are e.g. in the range of several kilometers, for instance 10 km each.

It should be noted that the serving area A of the REs 2 may not be elongated per se, but be a geographical area of any form, e.g. square, round, irregularly formed, which can be "covered" by a line 4, e.g. by laying the line 4 in a spiral, in zig-zags, in U-turns, cross-wise in a grid, et cet. across the area A.

As indicated above, the chain 3 can be set-up according to other standards than CPRI, e.g. according to the OBSAI standard or proprietary specifications. When reference is made to CPRI in the following, this encompasses all those alternatives.

In contrast to the distribution of the REs 2 and clusters $C_N$, their respective RECs 1 are all installed at a common site 12, e.g. in a shelter which houses said RECs 1 safe and indoors. The RECs 1 for the different clusters $C_0$, $C_1$, ..., $C_N$, ... are labelled $REC_0$, $REC_1$, ..., $REC_N$, ... and form a REC "farm" in a shelter 12. The shelter 12 can also embed any necessary back-haul transmission nodes, e.g. IP routers, connecting the shelter 12 to the rest of the 3GPP network such as a base station controller BSC (not shown).

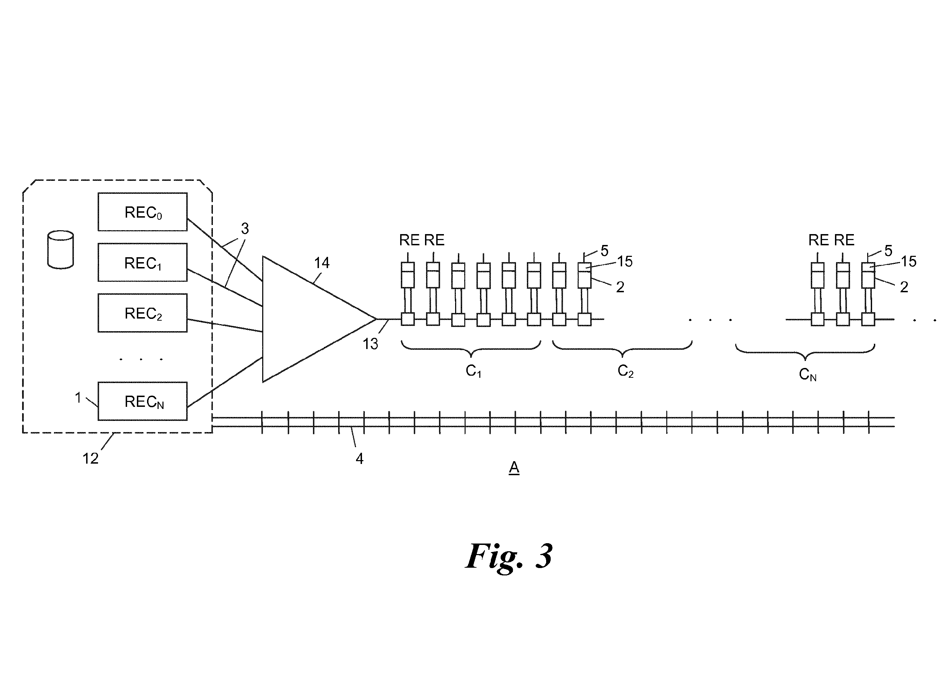

The physical links of the CPRI chains 3 can be realised in form of any suitable data network. Preferably, the CPRI chains 3 of the individual clusters $C_N$ are all connected via a common physical connection 13 as shown in Fig. 3. A multiplexer 14 merges (and splits, respectively) the data signals from (and to) the RECs 11 to (and from) the REs 2 of the different clusters $C_N$ (N = 0 ... M) to reduce cabling to a single physical connection 13 connecting all REs 2. Preferably, the physical connection 13 is implemented as an optical fibre link, and the multiplexer 14 performs a wavelength-division multiplexing technique (WDM), e.g. dense wavelength-division multiplexing (DWDM), so that only one optical fibre (or a pair of optical fibres, for downlink and uplink purposes) is necessary between the shelter 12 and all REs 2 of the entire radio subsystem 10.

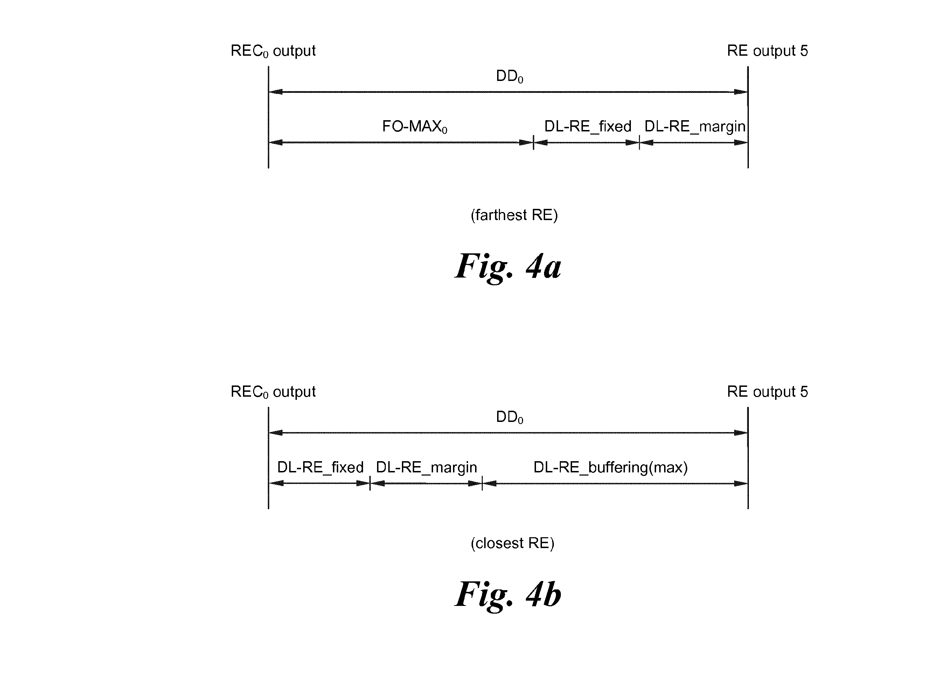

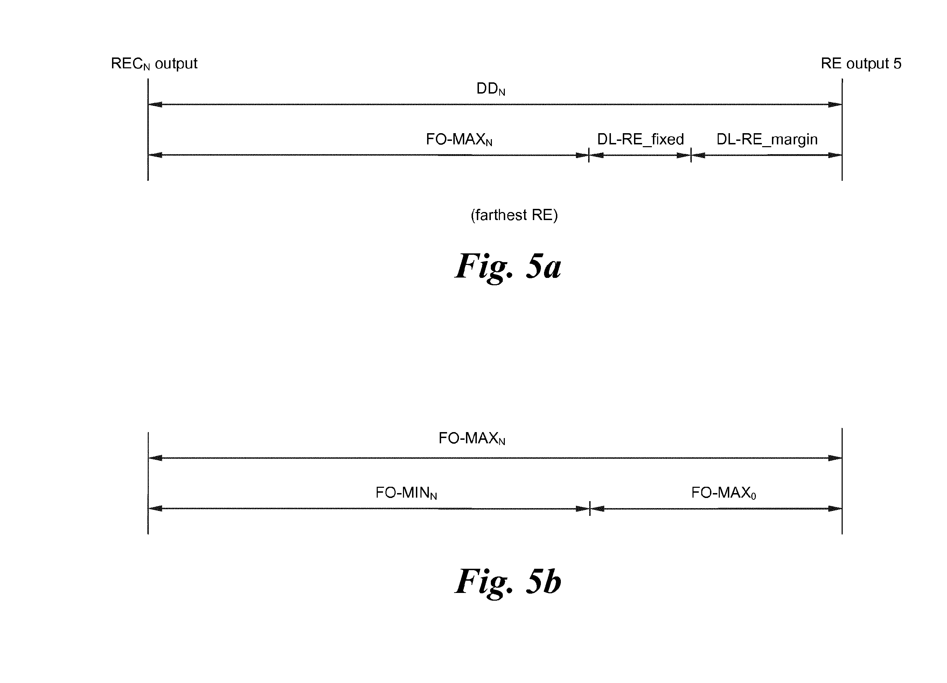

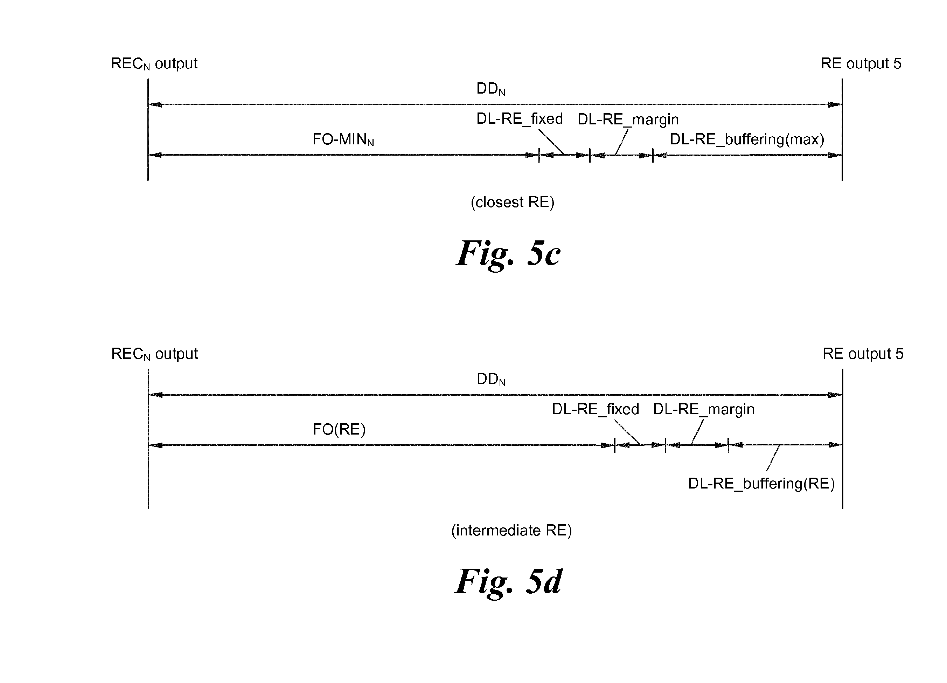

As has been explained with reference to Fig. 1, for BTS synchronicity of GSM bursts on the radio outputs 5 of the REs 2 of one BTS 11, i.e. in one cluster $C_N$, each RE 2 of a cluster $C_N$ has a buffer memory 15. The buffer memory 15 delays signals addressed to its radio output 5 by a delay time DL-RE which is increasing with decreasing distance d from its respective $REC_N$. The last RE in a cluster $C_N$ which is farthest from its $REC_N$ does not necessarily need to buffer data. The maximum buffer sizes for all REs 2 and the delay time DL-RE of each RE 2 is set and calibrated in the following manner, under reference to Figs. 4 and 5.

First the case of cluster $C_0$, i.e. the cluster which is closest to the REC farm 12, is considered. $DD_0$ (downlink delay in cluster $C_0$) is the delay experienced by a data bit, e.g. an I&Q (in-phase and quadrature) sample bit of the CPRI standard, between the exit of the $REC_0$ 1 and its transmission at the antenna port 5 of a given RE 2.

As already stated, all REs 2 within a cluster $C_N$ shall be synchronized with one another. For this reason, $DD_0$ should be the same for all REs 2 of cluster $C_0$. The farthest RE 2 of the cluster $C_0$ receives its I&Q signal, that has travelled a while in the fibre optics chain 13, with delay $FO\text{-}MAX_0$.

As a consequence of this delay time, the closest RE 2 of cluster $C_0$ must internally delay its radio transmission in order to be "in-sync" with the farthest RE 2. This delay is performed at the RE level by buffering the signal relayed over the CPRI chain 3 in its buffer memory 15 before the actual radio transmission. The worst case to take into account for the hardware dimensioning of the size of the buffer memory 15 of a RE 2 is the case where a RE 2 is at the foot of (nearest to) the $REC_0$, that is to say $FO\text{-}MIN_0 = 0$.

Fig. 4a is a graphical representation of the relationship between all the downlink delays in the horizontal time axis for the farthest RE 2 in the CPRI chain 3 of cluster $C_0$, and Fig. 4b for the closest RE 2 of this chain 3. DL-RE_fixed is the uncompressible time to process received data signals in the RE 2. $DD_0$ is defined as:

$$DD_0 = FO\text{-}MAX_0 + DL\text{-}RE\_fixed + DL\text{-}RE\_margin \qquad (1a)$$

and

$$DD_0 = DL\text{-}RE\_fixed + DL\text{-}RE\_margin + DL\text{-}RE\_buffering(max) \quad (1b)$$

From these two equations (1a) and (1b) we can deduce that the amount of buffer memory to fit in each RE 2 corresponds to a buffering delay of:

$$DL\text{-}RE\_buffering(max) = FO\text{-}MAX_0 \qquad (1c)$$

DL-RE_margin is an arbitrary fixed value which is optional. It is implemented as an additional buffering in the buffer memory 15 of the RE 2.

From Fig. 4a it can be seen that $DD_0$ should be chosen to be greater than $FO\text{-}MAX_0$ + DL-RE_fixed. The choice of $DD_0$ and $FO\text{-}MAX_0$ should be compatible with the amount of buffer memory 15 available in the RE 2.

For instance in a practical implementation of a BTS for GSM-R, $FO\text{-}MAX_0$ could be set to 600 $\mu$s, which corresponds approximately to a distance of 120 km in a CPRI chain 3, and $DD_0$ to 1050 $\mu$s.

Fig. 5a shows the delay timing for the farthest RE 2 in a more distant cluster $C_N$. $DD_N$ is chosen similarly to $DD_O$ in Equation (1) so that:

$$DD_N = FO\text{-}MAX_N + DL\text{-}RE\_fixed + DL\text{-}RE\_margin \qquad (2)$$

So, whatever the index N is, it should be noted that $DD_N$ = $FO\text{-}MAX_N$ + constant.

Given the arrangement presented in Figs. 2 and 3, the closest RE 2 of a cluster $C_N$ does not need to be at the foot or very close of its managing $REC_N$ 1. Actually, this arrangement allows to choose $FO\text{-}MIN_N$ such that:

$$FO\text{-}MIN_N = FO\text{-}MAX_N - FO\text{-}MAX_0 \qquad (3)$$

Equation (3) is depicted in Fig. 5b. This important aspect allows to limit the size of the buffer memory 15 in a RE 2, in spite of the potential long distance of cluster $C_N$ to the shelter 12, which is in contrast to the basic approach of Fig. 1.

Fig. 5c shows the timings for the closest RE 2 of cluster $C_N$, given Equation (3). One will notice - as a consequence of Equation (1c), (2) and (3) - that the exact same amount of maximal buffering memory is kept whichever cluster $C_N$ is considered, which is convenient for RE hardware manufacturing and installation as explained at the outset.

In order to calibrate the subsystem 10 the correct $FO\text{-}MAX_N$ for a given cluster $C_N$ can be stored into a non-volatile memory of $REC_N$. This can be done by commissioning $FO\text{-}MAX_N$ in each $REC_N$ 1 of the REC farm in shelter 12, e.g. with a local installation terminal. Alternatively, the REC software can automatically determine $FO\text{-}MAX_N$. One method for that can be to make a measurement of the round-trip delay between $REC_N$ and the farthest RE of cluster $C_N$ in accordance with CPRI layer 1 routines; $FO\text{-}MAX_N$ can then be deduced as round-trip-delay/2 + margin. The margin may also take into account a remote RE 2 which is forecasted but not yet installed in the cluster $C_N$.

Once $FO\text{-}MAX_N$ is set, $DD_N$ can be computed according to Equation (2). Then $REC_N$ will compute the correct DL-RE_buffering for each RE 2 of CPRI chain 3 or cluster $C_N$, respectively, taking into account FO(RE), which is the measured fibre-optics transmission delay, including delays to cross any other REs 2 in the path between the $REC_N$ and this particular RE 2, of the RE 2 considered:

$$DL\text{-}RE\_buffering(RE) = DD_N - FO(RE) - DL\text{-}RE\_fixed - DL\text{-}RE\_margin \quad (4)$$

Fig. 5d is a graphical representation of Equation (4). Each calculated DL-RE_buffering(RE) is then sent from $REC_N$ to the respective RE 2, e.g. by means of the point-to-point control-and-management (C&M) channel of the CPRI link 3.

The above mechanisms are also fully compatible with REs 2 which are connected in a ring topology as described in Fig. 5C of the standard CPRI, Specification V5.0, "Common Public Radio Interface (CPRI) Interface Specification", loc. cit. In a ring, a RE 2 can be accessed either from one side or the other. For a given cluster $C_N$, $FO\text{-}MAX_N$ should

be chosen to cope with the worst possible case. Fig. 6 is an illustration showing that the closest RE 2, in terms of geographical distance, is actually the farthest in terms of time distance. The worst case of the time distance is the relevant factor for choosing FO-MAX$_N$, as represented in Fig. 6.

The radio subsystem 10 and calibration method therefor presented herein make it possible to install numerous REs 2 in a long chain or a long ring of several hundreds of kilometers along an elongated area, e.g. a railway line. The principles which were found to achieve this are:

- the segmentation of the long chain into several clusters of REs, each cluster containing only a few REs;
- the management of each cluster by a separate REC in order to limit the synchronization requirements for a cluster, independently of the other clusters;
- the multiplexing (e.g. with WDM) of these clusters onto a single optical fibre or fibre pair to ease installation and reduce transmission costs;
- the specific arrangement of the clusters, each cluster containing neighboring REs in a limited span (120 km in one practical implementation), more clusters (hence more RECs) being added in order to cover longer distances; and
- the special relationship between timing variables as explained in the previous section, allowing to minimize RE buffer memory needs; the memory used is a function of the span of a cluster and not of the span of the whole subsystem.

The invention is thus not restricted to the specific embodiments described herein, but encompasses all variants, modifications and combinations thereof which fall into the scope of the appended claims.

**Claims**

1. A radio subsystem for serving an area along a line, in particular a railway line, comprising:

   at least two base transceiver stations (11) each of which has a radio equipment control (1) driving a series of radio equipments (2) connected thereto in a chain (3), the radio equipments (2) having radio outputs (5) for signals relayed over the chain (3),
   each radio equipment (2) having a buffer memory (15) delaying signals to its radio output (5) by a delay time which is increasing with decreasing distance (d) from its radio equipment control (1),
   wherein the radio equipment controls (1) are installed at a common site (12), the radio equipments (2) of a first of said chains (3, C$_N$) are distributed along a first segment (S$_N$) of the elongated area (4), the radio equipments (2) of a second of said chains (3, C$_N$) are distributed along a subsequent second segment (S$_N$) of the elongated area (4), and
   the size of the buffer memory (15) of the radio equipments (2) of a chain (3, C$_N$) is limited to provide a maximum delay time which is equal to the maximum relaying time of a signal from a first to a last radio equipment in said chain (3, C$_N$).

2. The radio subsystem of claim 1, wherein said chains (3, C$_N$) are connected to the common site (12) via a common physical connection (13).

3. The radio subsystem of claim 2, wherein the physical connection (13) is an optical fibre link.

4. The radio subsystem of claim 3, wherein said chains (3) are connected by wavelength-division multiplexing over the optical fibre link (13) to the common site (12).

5. The radio subsystem according to any one of the claims 1 to 4, wherein the common site (12) is a shelter housing said radio equipment controls (1) indoors.

6. The radio subsystem according to any one of the claims 1 to 5, wherein at least one of said chains (3) is part of a ring topology connected to its radio equipment control (1).

7. The radio subsystem according to any one of the claims 1 to 6, wherein the chain (3) is a CPRI chain and each base transceiver station (11) implements a BTS according to the GSM-R standard.

8. A method for calibrating a radio subsystem according to any one of the claims 1 to 7, comprising:

for each chain (3, $C_N$), determining a maximum delay of a signal relayed from the radio equipment control (1) to the farthest radio equipment (2) of said chain (3, $C_N$), and

for each other radio equipment (2) of said chain (3, $C_N$), determining a respective delay of a signal relayed from the radio equipment control (1) to said radio equipment (2) and calculating a buffering delay for said radio equipment (2) based on the difference between said maximum delay and said respective delay.

9. The method of claim 8, wherein the maximum delay and the respective delays are determined by round-trip measurements.

10. The method of claim 8 or 9, wherein the buffering delays for the radio equipments (2) of a chain (3, $C_N$) are calculated in the radio equipment control (1) of said chain (3, $C_N$) and sent therefrom to the respective radio equipment (2) via a point-to-point message.

**Fig. 1**

(State of the Art)

**Fig. 6**

EP 2 846 605 A1

*Fig. 2*

*Fig. 3*

REC$_0$ output                                    RE output 5

DD$_0$

FO-MAX$_0$          DL-RE_fixed   DL-RE_margin

(farthest RE)

*Fig. 4a*

REC$_0$ output                                    RE output 5

DD$_0$

DL-RE_fixed   DL-RE_margin      DL-RE_buffering(max)

(closest RE)

*Fig. 4b*

EP 2 846 605 A1

REC_N output                                                                    RE output 5

DD_N

FO-MAX_N          DL-RE_fixed    DL-RE_margin

(farthest RE)

## *Fig. 5a*

EP 2 846 605 A1

FO-MAX_N

FO-MIN_N                              FO-MAX_0

## *Fig. 5b*

EP 2 846 605 A1

RECₙ output

RE output 5

$$DD_N$$

DL-RE_fixed   DL-RE_margin

FO-MINₙ                                    DL-RE_buffering(max)

(closest RE)

## *Fig. 5c*

RECₙ output

RE output 5

$$DD_N$$

DL-RE_fixed   DL-RE_margin

FO(RE)

DL-RE_buffering(RE)

(intermediate RE)

## *Fig. 5d*

**EP 2 846 605 A1**

Europäisches
Patentamt

European
Patent Office

Office européen
des brevets

# EUROPEAN SEARCH REPORT

Application Number

EP 13 18 3076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/096222 A1 (CAGENIUS TORBJORN [SE] CAGENIUS TORBJOERN [SE]) 20 May 2004 (2004-05-20) | 8-10 | INV. H04W88/08 |
| Y | * paragraphs [0017] - [0019], [0057] - [0059]; figures 1A-1C * | 1-7 | |
| Y | EP 2 209 230 A1 (SELECOM SUD ELECTRONIQUE COMM [FR]) 21 July 2010 (2010-07-21) | 1-7 | |
| A | * paragraphs [0007] - [0042]; figure 5 * | 8-10 | |
| A | "CPRI Specification V5.0 - Common Public Radio Interface (CPRI); Interface Specification", , 21 September 2011 (2011-09-21), XP055033500, Retrieved from the Internet: URL:http://www.cpri.info/downloads/CPRI_v_5_0_2011-09-21.pdf [retrieved on 2012-07-20] * page 12; figure 5c * * paragraphs [4.2.9] - [4.2.9.1] * | 1-10 | |
| A | US 2004/057543 A1 (HUIJGEN ARIE [NL] ET AL) 25 March 2004 (2004-03-25) * the whole document * | 1-10 | TECHNICAL FIELDS SEARCHED (IPC) H04W H04B H04J |

The present search report has been drawn up for all claims

| Place of search | Date of completion of the search | Examiner |
|---|---|---|
| Munich | 1 April 2014 | Pasini, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**EP 2 846 605 A1**

## ANNEX TO THE EUROPEAN SEARCH REPORT
## ON EUROPEAN PATENT APPLICATION NO.

EP 13 18 3076

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2014

| Patent document cited in search report | | Publication date | Patent family member(s) | | Publication date |
|---|---|---|---|---|---|
| US 2004096222 | A1 | 20-05-2004 | AT | 472864 T | 15-07-2010 |
| | | | AU | 2003274879 A1 | 15-06-2004 |
| | | | CN | 1711789 A | 21-12-2005 |
| | | | EP | 1563700 A1 | 17-08-2005 |
| | | | HK | 1086973 A1 | 30-11-2007 |
| | | | KR | 20050074614 A | 18-07-2005 |
| | | | US | 2004096222 A1 | 20-05-2004 |
| | | | WO | 2004047472 A1 | 03-06-2004 |
| EP 2209230 | A1 | 21-07-2010 | EP | 2209230 A1 | 21-07-2010 |
| | | | FR | 2941123 A1 | 16-07-2010 |
| US 2004057543 | A1 | 25-03-2004 | AU | 2003253534 A1 | 19-04-2004 |
| | | | US | 2004057543 A1 | 25-03-2004 |
| | | | WO | 2004030241 A1 | 08-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Radio Subsystem Synchronization. *3GPP technical specifiction TS 45.010, www.3gpp.org/ftp/specs/html-info/45010.htm*
- Common Public Radio Interface (CPRI) Specification. *CPRI Specification, www.cpri.info/ downloads/CPRI_v_5_0_2011-09-21.pdf*

- Common Public Radio Interface (CPRI) Interface Specification. *CPRI standard CPRI Specification, www.cpri.info/downloads/CPRI_v_5_0_2011-09-21.pdf*
- Radio subsystem synchronization. *3GPP standard TS 45.010, www.3gpp.org/ftp/Specs/htmlinfo/45010.htm*